Europäisches Patentamt

European Patent Office

Office européen des brevets

(19)

(11) Veröffentlichungsnummer: **0 455 887 A2**

## (12) EUROPÄISCHE PATENTANMELDUNG

(21) Anmeldenummer: 90125356.7

(22) Anmeldetag: 22.12.90

(51) Int. Cl.⁵: **G02F 1/133, F21V 29/00**

(30) Priorität: 30.04.90 DE 4013845

(43) Veröffentlichungstag der Anmeldung:
**13.11.91 Patentblatt 91/46**

(84) Benannte Vertragsstaaten:
**DE FR GB IT NL**

(71) Anmelder: **VDO Adolf Schindling AG**
**Gräfstrasse 103**
**W-6000 Frankfurt/Main 90(DE)**

(72) Erfinder: **Wieland, Winfried**
**Schlehenweg 14**
**W-6380 Bad Homburg(DE)**
Erfinder: **Bärenfänger, Mathias**
**Hainer Chaussee 45**
**W-6072 Dreieich(DE)**
Erfinder: **Motamedian, Djalal**
**Gabelsbergerstrasse 11**
**W-6000 Frankfurt/Main(DE)**

(74) Vertreter: **Klein, Thomas, Dipl.-Ing. (FH)**
**Sodener Strasse 9 Postfach 6140**
**W-6231 Schwalbach a. Ts.(DE)**

(54) Beleuchtungseinrichtung.

(57) Eine Beleuchtungseinrichtung hat eine auf einem wärmeleitenden Träger (1) parallel zur Ebene des Trägers (1) befestigte Leuchtstoffröhre (2). Diese ist mit ihrer Mantelfläche durch einen wärmeleitenden Kleber mit dem Träger (1) verbunden. Hierdurch gelangt die von der Leuchtstoffröhre (2) erzeugte Wärme besonders gut in den Träger (1) und kann von dort abgeführt werden. Die Beleuchtungseinrichtung ist besonders zum Durchleuchten einer Flüssigkristallzelle geeignet.

Fig. 1

EP 0 455 887 A2

Die Erfindung bezieht sich auf eine Beleuchtungseinrichtung, welche eine auf einem wärmeleitenden Träger parallel zur Ebene des Trägers befestigte Leuchtstoffröhre aufweist, beispielsweise zum Durchleuchten einer Flüssigkristallzelle.

Beleuchtungseinrichtungen der vorstehenden Art werden bei Anzeigeinstrumenten benötigt, damit diese auch bei unzureichendem Fremdlicht zuverlässig abzulesen sind. Meist sind die Beleuchtungseinrichtungen innerhalb des Gehäuses des jeweiligen Instrumentes angeordnet und durchleuchten von der Rückseite her eine Anzeigefläche. Dabei tritt das Problem auf, daß die Leuchtstoffröhre Wärme erzeugt, die für das Anzeigeinstrument nachteilig ist. Deshalb muß man Mittel vorsehen, durch die die Wärme abgeführt werden kann. Besonders wirksam wäre es, die Lampe in einem Kühlluftstrom anzuordnen, jedoch hat ein solcher Kühlluftstrom den Nachteil, Staubteilchen mitzuführen, die oftmals im Anzeigeinstrument nachteilig sind. Würde man einen Kühlluftstrom gegen die Rückseite einer Flüssigkristallzelle leiten, um eine dort angeordnete Lampe zu kühlen, dann würde die Flüssigkristallzelle langsam verschmutzen und zunehmend schwerer abzulesen sein. Deshalb ist es erforderlich, die Flüssigkristallzelle vor Verschmutzung zu schützen und die Wärme durch Wärmeleitung abzuführen.

Üblicherweise befestigt man die Leuchtstoffröhre einer Beleuchtungseinheit mittels Drahtbügel oder Laschen auf einem Träger. Dadurch kann sich die Leuchtstoffröhre bei Erwärmung unabhängig vom Träger dehnen, und der Umgebungsluft oder einem Kühlluftstrom ist es möglich, die Leuchtstoffröhre allseitig zu umspülen. Nachteilig hierbei ist jedoch, daß die Wärme immer über die Luft abgeleitet oder abgeführt werden muß.

Der Erfindung liegt die Aufgabe zugrunde, eine Beleuchtungseinrichtung der eingangs genannten Art so auszubilden, daß die von ihrer Leuchtstoffröhre erzeugte Wärme unmittelbar in ihren Träger geleitet werden kann, ohne daß hierbei eine isolierende Luftschicht überwunden werden muß.

Diese Aufgabe wird erfindungsgemäß dadurch gelöst, daß die Leuchtstoffröhre mit ihrer Mantelfläche durch einen wärmeleitenden Kleber mit dem Träger verbunden ist.

Durch eine solche Befestigung erhält die Leuchtstoffröhre unmittelbar Kontakt mit ihrem Träger. Dadurch kann die von ihr erzeugte Wärme unmittelbar in den Träger fließen, von wo sie durch Wärmeleitung in einen rückwärtigen Bereich gelangen kann, wo sie entweder abgestrahlt oder von einem Luftstrom abgeführt werden kann. Durch die Erfindung wird es somit unnötig, die Leuchtstoffröhre unmittelbar durch eine Luftströmung zu kühlen, so daß eine Verschmutzungsgefahr für die Leuchtstoffröhre oder der von ihr beleuchteten Bauteile ausgeschlossen ist.

Eine besonders vorteilhafte Ausgestaltung der Erfindung besteht darin, daß der Träger in seiner der Leuchtstoffröhre zugewandten Stirnfläche eine dem Verlauf der Leuchtstoffröhre entsprechende, den wärmeleitenden Kleber aufnehmende Nut aufweist, in welche die Leuchtstoffröhre teilweise eingebettet ist. Durch diese Gestaltung erhält die Leuchtstoffröhre über ihre Länge statt Linienberührung mit dem Träger über eine relativ große Fläche unter Zwischenschaltung des wärmeleitenden Klebers Kontakt mit dem Träger. Dadurch wird die entstehende Wärme besonders gut in den Träger geleitet. Weiterhin erlaubt es die Nut, eine größere Klebstoffmenge vorzusehen und legt den Bereich fest, in dem Klebstoff vorgesehen werden muß. Die relativ große Klebstoffmenge ermöglicht es, nach dem Aufdrücken der Leuchtstoffröhre und dem Aushärten des Klebers unterschiedliche Wärmedehnungen zwischen dem Träger und der Leuchtstoffröhre innerhalb des Klebers auszugleichen.

Eine andere vorteilhafte Weiterbildung der Erfindung besteht darin, daß der Träger für die beiden Lampenenden der Leuchtstoffröhre jeweils einen abzudichtenden Durchlaß hat, durch den jeweils ein Lampenende der Leuchtstoffröhre zur Rückseite des Trägers geführt ist. Hierdurch gelangen die Lampenenden, an denen bei Leuchtstoffröhren die Hauptwärme entsteht, in einen rückwärtigen Bereich des Trägers, wo ihre Wärme weniger störend ist und wo diese Wärme ohne Nachteile durch Konvektion abgeführt werden kann. Außerdem kann hierdurch vermieden werden, daß der Kleber durch besonders hohe Temperaturen beansprucht wird.

Für die Kühlung der Lampenenden durch einen Kühlluftstrom ist es vorteilhaft, wenn gemäß einer anderen Ausgestaltung der Erfindung die Lampenenden mit dem übrigen Bereich der Leuchtstoffröhre einen spitzen Winkel bilden. Hierdurch gelangen die Lampenenden in einen Gehäusebereich, in dem sich leichter eine hohe Kühlluftgeschwindigkeit erzielen läßt als in einem Randbereich, in welchem die Lampenenden bei rechtwinkliger Herausführung aus den Durchlässen des Trägers gelangen würden.

Die Leuchtstoffröhre kann mit dem Träger als Baueinheit ausgebildet werden, die einfach und gut wärmeleitend gegen ein der Wärmeabfuhr dienendes, weiteres Bauteil montiert werden kann, wenn der Träger als flach gegen eine Frontplatte eines Kühlkörpers zu befestigender Lampenhalter ausgebildet ist.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in

Fig. 1    eine Vorderansicht der erfindungsgemäßen Beleuchtungseinrichtung,

Fig. 2 eine Seitenansicht der Beleuchtungseinrichtung,

Fig. 3 einen Schnitt durch die Beleuchtungseinrichtung entlang der Linie III - III in

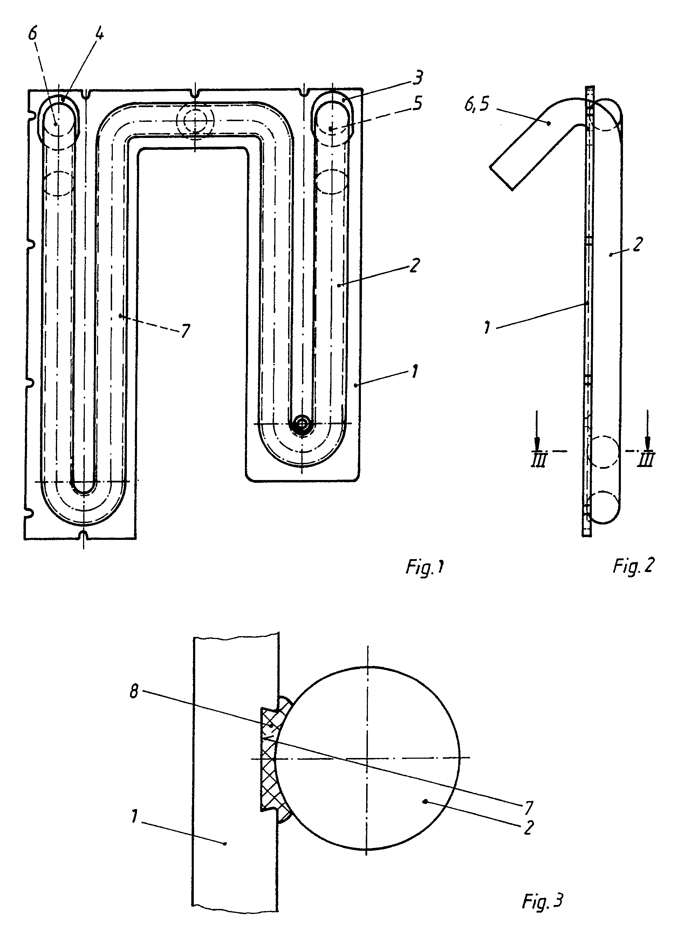

Figur 2 in einem gegenüber Figur 2
vergrößerten Maßstab.

Die Figur 1 zeigt einen Träger 1, auf welchem eine mäanderförmig verlaufende Leuchtstoffröhre 2 befestigt ist. Im oberen Bereich des Trägers 1 sind zwei abzudichtende Durchlässe 3, 4 zu erkennen, durch die die Leuchtstoffröhre 2 jeweils mit einem Lampenende 5, 6 zur Rückseite des Trägers 1 geführt ist. In der der Leuchtstoffröhre 2 zugewandten Stirnfläche des Trägers 1 ist eine entsprechend des Verlaufs der Leuchtstoffröhre 2 verlaufende, gestrichelt dargestellte Nut 7 vorgesehen, in die die Leuchtstoffröhre 2 teilweise hineinragt.

Die Figur 2 läßt erkennen, wie das Lampenende 6 und das von ihr abgedeckte Lampenende 5 unter Bildung eines spitzen Winkels mit dem übrigen Teil der Leuchtstoffröhre 2 durch den Träger 1 hindurchgeführt ist.

Die Schnittdarstellung gemäß Figur 3 zeigt, daß sich in der Nut 7 ein wärmeleitender Kleber 8 befindet, in welchem die Leuchtstoffröhre 2 eingebettet ist, so daß sie über eine relativ große Fläche Wärme in den Träger 1 leiten kann.

Nicht dargestellt ist ein Kühlrippen aufweisender Kühlkörper, welcher eine Frontfläche hat, gegen die der Träger 1 geschraubt werden kann, so daß die von der Leuchtstoffröhre 2 in den Träger 1 gelangende Wärme gut in diesen Kühlkörper zu fließen vermag, um dann nach außen abgeführt werden zu können.

**Patentansprüche**

1. Beleuchtungseinrichtung, welche eine auf einem wärmeleitenden Träger parallel zur Ebene des Trägers befestigte Leuchtstoffröhre aufweist, beispielsweise zum Durchleuchten einer Flüssigkristallzelle, dadurch gekennzeichnet, daß die Leuchtstoffröhre (2) mit ihrer Mantelfläche durch einen wärmeleitenden Kleber (8) mit dem Träger (1) verbunden ist.

2. Beleuchtungseinrichtung nach Anspruch 1, dadurch gekennzeichnet, daß der Träger (1) in seiner der Leuchtstoffröhre (2) zugewandten Stirnfläche eine dem Verlauf der Leuchtstoffröhre (2) entsprechende, den wärmeleitenden Kleber (8) aufnehmende Nut (7) aufweist, in welche die Leuchtstoffröhre (2) teilweise eingebettet ist.

3. Beleuchtungseinrichtung nach den Ansprüchen 1 oder 2, dadurch gekennzeichnet, daß der Träger (1) für die beiden Lampenenden (6, 5) der Leuchtstoffröhre (2) jeweils einen abzudichtenden Durchlaß (3, 4) hat, durch den jeweils ein Lampenende (6, 5) der Leuchtstoffröhre (2) zur Rückseite des Trägers (1) geführt ist.

4. Beleuchtungseinrichtung nach Anspruch 3, dadurch gekennzeichnet, daß die Lampenenden (6, 5) mit dem übrigen Bereich der Leuchtstoffröhre (2) einen spitzen Winkel bilden.

5. Beleuchtungseinrichtung nach zumindest einem der vorangehenden Ansprüche, dadurch gekennzeichnet, daß der Träger (1) als flach gegen eine Frontplatte eines Kühlkörpers zu befestigender Lampenhalter ausgebildet ist.

Fig. 1

Fig. 2

Fig. 3